# EUROPEAN PATENT APPLICATION

(11) **EP 4 541 581 A1**
(43) Date of publication of application: **23.04.2025**
(21) Application number: 23823927.1
(22) Date of filing: 13.06.2023
(51) Int. Cl.: B32B 27/00, B32B 9/00, B32B 27/40, B65D 65/40

(54) **MULTILAYER FILM AND PACKAGING FILM**

(30) Priority: 15.06.2022 JP 2022096288; 08.07.2022 JP 2022110371
(71) Applicant: Toppan Holdings Inc., Tokyo 110-0016 (JP)
(72) Inventor: TAKEUCHI, Yu, Tokyo 110-0016 (JP); YAMAKAWA, Hideyuki, Tokyo 110-0016 (JP); TANAKA, Ayumi, Tokyo 110-0016 (JP)
(74) Representative: Hoffmann Eitle
(86) International application number: PCT/JP2023/021950
(87) International publication number: WO 2023/243637

(57) **Abstract**

This multilayer film (1) comprises: a first film (11) that serves as a substrate film; and a coating layer (14) that is provided on one surface of the first film (11), and that includes an alkoxysilane hydrolysate and an alkoxysilane dehydration-condensation reaction product. At the surface of the coating layer (14), the amount of SiOH⁺, which is obtained using time-of-flight type secondary ion mass spectrometry and standardized according to the total positive ion amount, is within a range of 0.02 to 0.07.

## Description

### [Technical Field]

The present invention relates to a multilayer film and a packaging film.

### [Background Art]

Packaging films used in the packaging of food products, medical products, and the like, are required to have gas barrier properties to prevent degradation of the contents. As such a packaging film, a packaging film is known in which a sealant film is laminated, via an adhesive layer, onto a gas barrier film provided with a substrate layer, an anchor coat layer, a vapor deposition layer, and a gas barrier coating layer in this order (PTL 1).

### [Citation List]

### [Patent Literature]

PTL 1: JP 2018-1631 A

### [Summary of the Invention]

### [Problem to be Solved by the Invention]

In the packaging film described above, if the adhesive strength between the gas barrier film and the sealant film is low, stretching of the sealant film may be observed when a user cuts the packaging film by hand, or peeling may occur between the gas barrier film and the sealant film after heat treatment. Therefore, the present invention has an object of reducing the likelihood of problems occurring that are caused by a low adhesive strength between a gas barrier coating layer (hereinafter also referred to as a coating layer), which is obtained by applying a coating liquid containing an alkoxysilane or a hydrolysate of the alkoxysilane onto a certain film, and another film adhered to the coating layer.

### [Solution to Problem]

According to an aspect of the present invention, a multilayer film is provided including: a first film that serves as a substrate film; and a coating layer that is provided on one surface of the first film, and that includes an alkoxysilane hydrolysate and an alkoxysilane dehydration-condensation reaction product; wherein at a surface of the coating layer, an amount of SiOH⁺, which is obtained using time-of-flight type secondary ion mass spectrometry and normalized to a total positive ion amount, is within a range of 0.02 to 0.07.

According to another aspect of the present invention, a multilayer film is provided according to the aspect above, wherein the coating layer further contains a water-soluble polymer.

According to yet another aspect of the present invention, a multilayer film is provided according to any one of the aspects above, wherein the alkoxysilane is a mixture of a tetraalkoxysilane and a silane coupling agent.

According to yet another aspect of the present invention, a multilayer film is provided according to any one of the aspects above, wherein the coating layer is a cured product of a coating liquid having an alkoxysilane content in a range of 20 to 90 parts by mass with respect to 100 parts by mass of a total amount of the alkoxysilane and the water-soluble polymer.

According to yet another aspect of the present invention, a multilayer film is provided according to any one of the aspects above, further including a gas barrier layer which is interposed between the first film and the coating layer.

According to yet another aspect of the present invention, a multilayer film is provided according to any one of the aspects above, further including an anchor layer which is interposed between the first film and the gas barrier layer.

According to yet another aspect of the present invention, a packaging film is provided including: a multilayer film according to any one of the aspects above; an adhesive layer containing a urethane-based material, and provided so as to make contact with the coating layer; and a second film that is laminated to the multilayer film so as to face the coating layer and sandwich the adhesive layer therebetween.

According to yet another aspect of the present invention, a packaging film is provided according to the aspect above wherein the second film is a sealant film.

According to yet another aspect of the present invention, a packaging film is provided according to any one of the aspects above, wherein a sealant film is provided on another surface of the substrate film.

According to yet another aspect of the present invention, a packaging body is provided including a packaging film according to any one of the aspects above.

According to yet another aspect of the present invention, a packaged article is provided including: the packaging body according to the aspect above; and contents filled inside the packaging body.

### [Advantageous Effects of the Invention]

According to the present invention, it is possible to reduce the likelihood of problems occurring that are caused by a low adhesive strength between a coating layer, which is obtained by applying a coating liquid containing an alkoxysilane or a hydrolysate of the alkoxysilane onto a certain film, and another film adhered to the coating layer.

### [Brief Description of the Drawings]

Fig. 1 is a cross-sectional view schematically showing a portion of a packaging film according to a first embodiment of the present invention.
Fig. 2 is a cross-sectional view schematically showing a portion of a multilayer film, which is an intermediate product of the packaging film.
Fig. 3 is a cross-sectional view schematically showing a portion of a packaging film according to a second embodiment of the present invention.
Fig. 4 is a cross-sectional view schematically showing a portion of a packaging film according to a third embodiment of the present invention.
Fig. 5 is a perspective view schematically showing an example of a packaging body.
Fig. 6 is a graph showing a result of a ToF-SIMS measurement of the gas barrier film of Example 4.

### [Description of the Embodiments]

Hereinafter, embodiments of the present invention will be described with reference to the drawings. The embodiments described below are more specific implementations of each of the aspects above. The subject matter described below can be incorporated into each of the aspects described above, either alone or in combination.

Furthermore, the embodiments described below are merely examples of configurations for specifically implementing the technical ideas of the present invention, and the technical ideas of the present invention are not limited to the materials, shapes, and structures of the components described below. Various modifications can be made to the technical ideas of the present invention within a technical scope defined by the claims.

It should be noted that components having equivalent or similar functions are designated with like reference signs in the drawings referenced below, and duplicate explanations are omitted. **In** addition, the drawings are schematic, and the relationship between the dimensions in one direction and the dimensions in another direction, the relationship between the dimensions of one member and the dimensions of another member, and the like, may differ from actual relationships.

### <1> First Embodiment

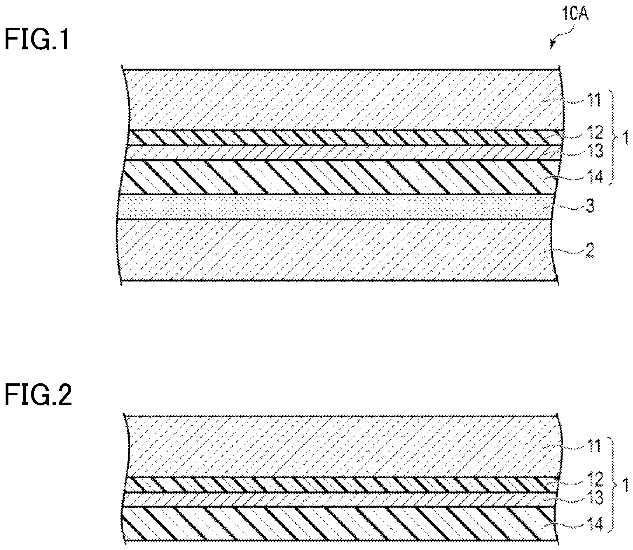

Fig. 1 is a cross-sectional view schematically showing a portion of a packaging film according to a first embodiment of the present invention. Fig. 2 is a cross-sectional view schematically showing a portion of a multilayer film, which is an intermediate product of the packaging film.

The packaging film 10A shown in Fig. 1 includes a multilayer film 1 and a sealant layer 2. The packaging film 10A further includes a first adhesive layer 3 that adheres the multilayer film 1 and the sealant layer 2 to each other.

The packaging film 10A is manufactured, for example, by a roll-to-roll method. Note that the term "film" used to refer to the components of the packaging film encompasses thin layers that can be handled alone from the manufacturing stage and are flexible, and thin layers provided by extrusion lamination on the components of the packaging film 10A, but does not encompass thin layers formed by coating, vapor deposition, and the like, on the components of the packaging film 10A.

The packaging film 10A is manufactured by firstly preparing the multilayer film 1, and then bonding the multilayer film 1 and the sealant layer 2 to each other via the first adhesive layer 3.

Hereinafter, the layers contained in the multilayer film 1 will be firstly described, and then the layers contained in the packaging film 10A will be described.

### <1.1> Multilayer Film

As shown in Fig. 2, the multilayer film 1 includes a first substrate layer 11, an anchor layer, 12, a gas barrier layer 13, and a coating layer 14 in this order. The multilayer film 1 is also referred to as a gas barrier film. The thickness of the multilayer film 1 is not particularly limited.

### <1.1.1> First Substrate Layer

The first substrate layer 11 is a substrate film that supports the gas barrier layer 13 and the coating layer 14 and the like. Examples of the first substrate layer 11 include polyester films such as polyethylene terephthalate (PET) films and polyethylene naphthalate (PEN) films, polyolefin films such as polyethylene films and polypropylene films, polystyrene films, polyamide films such as 66-nylon films, polycarbonate films, polyacrylonitrile films, and engineering plastic films such as polyimide films. Among these, the first substrate layer 11 is preferably a polyolefin film in consideration of environmental aspects. The polyolefin film may be a stretched film or may be an unstretched film. The first substrate layer 11 is preferably a stretched polyolefin film, such as a biaxially stretched polyolefin film. A stretched polyolefin film is preferable from the viewpoint of the impact resistance, heat resistance, water resistance, and dimensional stability. Furthermore, the first substrate layer 11 may also be a film derived from a resin such as polypropylene that has been recycled from industrial waste.

The thickness of the first substrate layer 11 is not particularly limited. The thickness can be, for example, set to a range of 6 to 200 µm depending on the application, and from the viewpoint of obtaining superior impact resistance and superior gas barrier properties, the thickness is preferably set to a range of 9 to 50 µm, and more preferably set to a range of 12 to 38 µm.

### <1.1.2> Anchor Layer

Although the anchor layer 12 can be omitted, two effects can be obtained when it is provided on the first substrate layer 11, namely an improvement in the adhesion performance between the first substrate layer 11 and the gas barrier layer 13, and an improvement in the smoothness of the surface of the first substrate layer 11. When the smoothness of the surface of the first substrate layer 11 is improved, it becomes easier to uniformly form the gas barrier layer 13 without defects, and a high barrier performance can be more easily exhibited. The anchor layer 22 can be formed using an anchor coating agent.

The anchor coating agent is not particularly limited, but for example, an acrylic-based primer agent, a urethane-based primer agent, or an acrylic urethane-based primer agent can be used. These primer agents may contain a solvent, a silane coupling agent, and the like, in addition to the acrylic material, urethane material, or acrylic urethane material.

Although the thickness of the anchor layer 12 is not particularly limited, the thickness is preferably in a range of 0.01 to 5 µm, more preferably in a range of 0.03 to 3 µm, and particularly preferably in a range of 0.05 to 2 µm. When the anchor layer 12 is made thicker, a higher interlayer adhesive strength tends to be obtained. However, when the anchor layer 12 is made thicker, the gas barrier properties tend to decrease.

As the method of applying the anchor coating agent to the first substrate layer 11, any known application method can be used without particular limitation, and examples of the method include immersion methods (dipping methods) and methods using a spray, a coater, a printer, a brush, and the like. In addition, examples of the types of coaters and printers used in these methods, and the application method include gravure coaters, reverse-roll coaters, micro gravure coaters, combined chamber and doctor coaters, air-knife coaters, dip coaters, bar coaters, comma coaters, and die coaters using the direct gravure method, reverse gravure method, kiss reverse gravure method, and offset gravure method.

The anchor coating agent is preferably applied such that the mass per 1 m² of the dried coating film is in a range of 0.01 to 5 g/m², and more preferably applied such that the mass is 0.03 to 3 g/m². When the application amount of the anchor coating agent is smaller, it is more likely that non-continuous portions of the anchor layer 12 are formed. On the other hand, if the amount of anchor coating agent applied is larger, the coating film does not dry completely and the solvent tends to remain.

The drying method of the coating film is not particularly limited, and examples include a method based on natural drying, a method of drying in an oven set at a predetermined temperature, a method of using a dryer, such as an arch dryer, a floating dryer, a drum dryer. or an infrared ray dryer that is attached to the coaters mentioned above. The drying conditions of the coating film can be selected as appropriate according to the drying method. For example, in a method that dries the coating film in an oven, it is preferable for the temperature to be set to a range of 60°C to 100°C, and for the coating film to be dried for a period of 1 second to 2 minutes.

### <1.1.3> Gas Barrier Layer

Although the gas barrier layer 13 can be omitted, providing this layer can impart the multilayer film 1 with gas barrier properties together with the coating layer 14. The gas barrier layer 13 is, as described later, a layer that is formed by vacuum film formation.

The gas barrier layer 13 is made of, for example, an inorganic oxide. Examples of the inorganic oxide include aluminum oxide, silicon oxide, magnesium oxide, and tin oxide. From the viewpoint of the transparency and barrier properties, the inorganic oxide is preferably selected from a group consisting of aluminum oxide, silicon oxide, and magnesium oxide. Furthermore, from the viewpoint obtaining superior tensile elongation during processing, the gas barrier layer 13 is preferably a layer made of silicon oxide. The gas barrier layer 13 makes it possible to obtain high barrier properties while having a thickness within a range that does not affect the recyclability of the multilayer film 1.

When the gas barrier layer 13 is made of silicon oxide, the atomic ratio O/Si between the oxygen atoms and silicon atoms in the gas barrier layer 13 is preferably 1.7 or more, more preferably 1.75 or more, and even more preferably 1.8 or more. When the atomic ratio O/Si is smaller, the content of Si atoms increases, and the transparency decreases. The atomic ratio O/Si is preferably 2.0 or less, more preferably 1.9 or less, and even more preferably 1.85 or less.

When the atomic ratio O/Si is made excessively high, the crystallinity of the silicon oxide increases, the gas barrier layer 13 becomes too hard, and the tensile resistance decreases. When the gas barrier layer 13 has a high tensile resistance, cracks can form in the gas barrier layer 13 when the coating layer 14 is laminated. Furthermore, when the gas barrier layer 13 has a high tensile resistance, even if the first substrate layer 11 shrinks due to the heat applied during retort treatment or boiling treatment, the gas barrier layer 13 sufficiently follows the shrinkage, and a decrease in the barrier properties is unlikely to occur.

The atomic ratio O/Si can be obtained by the X-ray photoelectron spectroscopy (XPS) method. For example, a JPS-90MXV manufactured by JEOL Ltd. is used as the X-ray photoelectron spectroscopy analysis device, non-monochromatized MgKα (1,253.6 eV) is used as the X-ray source, and the measurement is performed at an X-ray output of 100 W (10 kV-10 mA). Quantitative analysis to determine the atomic ratio O/Si can use relative sensitivity factors of 2.28 and 0.9 for O1s and Si2p, respectively.

The thickness of the gas barrier layer 13 is preferably in a range of 10 to 50 nm, and is more preferably in a range of 20 to 40 nm. When the thickness of the gas barrier layer 13 is made smaller, the water vapor barrier properties are reduced. When the thickness of the gas barrier layer 13 is larger, cracks are likely to occur due to deformation caused by internal stress, which tends to result in a decrease in the water vapor barrier properties. Furthermore, when the thickness of the gas barrier layer 13 is larger, because the cost tends to increase due to an increase in the amount of materials used, a longer film formation time, and the like, it is not preferable from an economic viewpoint.

The gas barrier layer 13 can be formed by vacuum film formation. The vacuum film formation is performed by a physical vapor deposition method or a chemical vapor deposition method. Examples of physical vapor deposition methods include, but are not limited to, the vacuum vapor deposition method, sputtering method, and ion plating method. Examples of chemical vapor deposition methods include, but are not limited to, the thermal chemical vapor deposition (CVD) method, plasma CVD method, and photo CVD method.

Specifically, in the vacuum film formation described above, the resistance heating vacuum vapor deposition method, electron beam (EB) heating vacuum vapor deposition method, induction heating vacuum vapor deposition method, sputtering method, reactive sputtering method, dual magnetron sputtering method, and plasma-enhanced chemical vapor deposition (PECVD) method are preferably used. In consideration of the productivity, the vacuum vapor deposition method is currently the most preferable. As a heating means in the vacuum vapor deposition method, it is preferable to use one of the electron beam heating method, resistive heating method, or inductive heating method.

### <1.1.4> Coating Layer

The coating layer 14 is a layer that imparts the multilayer film 1 with gas barrier properties together with the gas barrier layer 13. The coating layer 14 includes an alkoxysilane hydrolysate and an alkoxysilane dehydration-condensation reaction product.

The coating layer 14 is a layer that is formed by coating a coating liquid. The coating liquid contains at least one type of substance selected from a group consisting of alkoxysilanes and hydrolysates of the alkoxysilanes.

The alkoxysilane is preferably a tetraalkoxysilane, a trialkoxysilane, a dialkoxysilane, a monoalkoxysilane, or a mixture of two or more of these. The alkoxysilane is preferably a tetraalkoxysilane, a trialkoxysilane, or a mixture of these. The trialkoxysilane, dialkoxysilane, and monoalkoxysilane may be a silane coupling agent. The alkoxysilane preferably includes a tetraalkoxysilane and a silane coupling agent, which is specifically a trialkoxysilane.

In one form, the coating layer 14 is a cured product of a coating liquid containing at least one type of substance selected from a group consisting of alkoxysilanes represented by general formula (I) below, and hydrolysates of the alkoxysilanes. 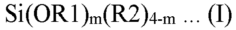 In the general formula (I) above, R1 and R2 are independently a monovalent organic group having 1 to 8 carbon atoms, and are preferably alkyl groups such as a methyl group or an ethyl group. m represents an integer from 1 to 4. Note that when a plurality of R1 and R2 groups are present, the R1 and R2 groups may each be the same as each other, or may be different from each other. The alkoxysilane represented by general formula (I) may contain a silane coupling agent.

As a preferable form, the coating layer 14 is a cured product of a coating liquid containing at least one type of substance selected from a group consisting of alkoxysilanes represented by general formula (II) below, and hydrolysates of the alkoxysilanes. 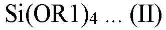 In the general formula (I) above, R1 is independently a monovalent organic group having 1 to 8 carbon atoms, and is preferably an alkyl group such as a methyl group or an ethyl group. The R1 groups may be the same or different.

Specific examples of the alkoxysilane represented by general formula (II) above include tetramethoxysilane [Si(OCH₃)₄] and tetraethoxysilane [Si(OC₂H₅)₄]. Tetraethoxysilane is preferable because hydrolysates of tetraethoxysilane are relatively stable in aqueous solvents.

As mentioned above, the coating liquid may contain a silane coupling agent. Examples of the silane coupling agent include: silane coupling agents having a vinyl group, such as vinyl trimethoxysilane and vinyl triethoxysilane; silane coupling agents having an epoxy group, such as 3-glycidoxypropyl trimethoxysilane, 3-glycidoxypropyl triethoxysilane, 3-glycidoxypropyl methyldimethoxysilane, 3-glycidoxypropyl ethyldiethoxysilane, and β-(3,4-epoxycyclohexyl)trimethoxysilane; silane coupling agents having a mercapto group, such as 3-mercaptopropyl trimethoxysilane and 3-mercaptopropyl methyldimethoxysilane; silane coupling agents having an amino group, such as 3-aminopropyl trimethoxysilane and 3-aminopropyl triethoxysilane; and silane coupling agents having an isocyanate group, such as 3-isocyanatepropyl triethoxysilane and 1,3,5-tris(3-trimethoxysilylpropyl)isocyanurate. These silane coupling agents may be used singly or in combination of two or more.

The coating liquid may further contain a water-soluble polymer. Examples of the water-soluble polymer include polyvinyl alcohol and its modified forms, polyvinyl pyrrolidone, starch, methyl cellulose, carboxymethyl cellulose, and sodium alginate. Among these, polyvinyl alcohol (hereinafter, may be abbreviated as PVA) and its modified forms are preferable because the coating layer 14 can be provided with superior gas barrier properties. Here, PVA is generally obtained by saponification of polyvinyl acetate, and for example, it is possible to use so-called partially saponified PVA in which several tens of percent of acetate groups remain, complete PVA in which only a few percent of acetate groups remain, and the like. Furthermore, as a modified form of PVA, it is possible to use PVA into which ethylene groups have been introduced to an extent that maintains the water solubility.

The content of the alkoxysilane with respect to 100 parts by mass of the total amount of the alkoxysilane and the water-soluble polymer in the solid content of the coating liquid is preferably 20 parts by mass or more and 90 parts by mass or less. If the content of the alkoxysilane is less than 20 parts by mass, it tends to become more difficult for silanol groups to be present at a high density at the surface of the coating layer 14. If the content of the alkoxysilane exceeds 90 parts by mass, the gas barrier properties of the coating layer 14 tend to become reduced.

A known additive such as an isocyanate compound, a dispersant, a stabilizer, a viscosity modifier, or a coloring agent may be added to the coating liquid to an extent that does not impair the gas barrier properties.

The thickness of the coating layer 14 is not particularly limited, but is preferably in a range of 50 to 1,000 nm, and is more preferably in a range of 100 to 500 nm. When the coating layer 14 is made thicker, even higher gas barrier properties tend to be obtained. However, when the coating layer 14 is made thicker, the flexibility of the multilayer film 1 tends to decrease.

The coating layer 14 can be formed by applying the coating liquid to the gas barrier layer 13, and then drying the obtained coating film. The coating liquid can be applied, for example, by the dipping method, roll coating method, gravure coating method, reverse gravure coating method, air-knife coating method, comma coating method, die coating method, screen printing method, spray coating method, or gravure offset method. The coating film formed by applying the coating liquid can be dried, for example, by the hot air drying method, hot roll drying method, high frequency irradiation method, infrared irradiation method, ultraviolet (UV) irradiation method, or a combination of these methods.

The surface of the coating layer 14 has a high density of silanol groups. Specifically, the surface of the coating layer 14 has an amount of SiOH⁺, which is obtained using time-of-flight secondary ion mass spectrometry and standardized according to a total positive ion amount, in a range of 0.02 to 0.07. Hereinafter, the "amount of SiOH⁺, which is obtained by ToF-SIMS standardized according to a total positive ion amount" will also be simply referred to as the "amount of SiOH⁺ at the surface of the coating layer". The amount of SiOH⁺ at the surface of the coating layer is preferably in a range of 0.03 to 0.07, and more preferably in a range of 0.03 to 0.05.

When another film is laminated on the surface of such a coating layer 14 via a urethane-based adhesive layer, the silanol groups at the surface of the coating layer 14 are capable of forming a high density of urethane bonds with the isocyanate groups (-N=C=O) contained in the urethane-based adhesive layer. As a result, it is possible to achieve a high adhesive strength between the coating layer 14 and another film.

The "amount of SiOH⁺, which is obtained using time-of-flight secondary ion mass spectrometry and standardized according to a total positive ion amount" refers to the value obtained by measuring the number of SiOH⁺ ions (that is, the number ions in the peak at the mass-to-charge ratio m/z = 45) at the surface of the coating layer using time-of-flight secondary ion mass spectrometry (ToF-SIMS), and then dividing the obtained number of SiOH⁺ ions by the total number of positive ions (that is, by the total ion count (TIC)).

The ToF-SIMS measurement is performed using a TRIFTV nanoTOF manufactured by ULVAC-PHI, Inc. Specifically, the measurement by ToF-SIMS is performed by etching the surface of the coating layer 14 under the following conditions, and measuring the ions (secondary ions) that are discharged by irradiation with an ion beam (primary ions) under the following conditions.

### (1) Etching Conditions

Etching ion: GCIB (gas cluster ion beam) Ar₂₅₀₀
Etching ion acceleration voltage: 5 kV (maximum current)
Etching area: 500 µm sides
Etching time: 5 seconds (cumulative time)

### (2) Measurement Conditions

Primary ion type: Bi₃⁺⁺
Current: 0.5 µA
Measurement area: 100 µm
Mass range: 1.5 to 5,000 u
Acceleration voltage: 30 kV
Aperture: 200 µm φ
Measurement time: 2 minutes
Charge neutralization: Yes

When the amount of SiOH⁺ at the surface of the coating layer is less than 0.02, the adhesion between the coating layer 14 and the adhesive layer containing a urethane material cannot be strengthened, and the hand-tearability and gas barrier properties after retort treatment cannot be made sufficient. Furthermore, when the amount of SiOH⁺ at the surface of the coating layer is less than 0.02, gelation progresses excessively and the coating layer 14 shrinks when dried, which reduces the adhesive strength at the interface between the coating layer 14 and the gas barrier layer 13, and sufficient gas barrier performance may not be obtained. When the amount of SiOH⁺ at the surface of the coating layer exceeds 0.07, the formation of a silica matrix in the coating layer 14 is insufficient, resulting in a reduction in the gas barrier properties.

The coating layer 14, which has a high density of silanol groups at the surface, can be prepared by adjusting the drying conditions of the coating film consisting of the coating liquid. At the time of drying, the alkoxysilane or the hydrolysate of the alkoxysilane in the coating liquid undergoes dehydration-condensation. As a result, when drying is performed under mild conditions so that the alkoxysilane or the hydrolysate of the alkoxysilane in the coating liquid does not undergo excessive dehydration-condensation, a high density of silanol groups can be provided at the surface of the coating layer. In terms of the drying conditions, the drying temperature, drying time, and airflow conditions, such as the airflow rate and airflow direction, can be adjusted.

When the drying is performed in an oven, the drying temperature is preferably in a range of 40°C to 180°C and more preferably in a range of 45°C to 150°C. The drying time is preferably in a range of 40 to 250 seconds, and more preferably in a range of 40 to 150 seconds. Furthermore, it is preferable that the drying period includes drying by a natural convection method. **In** other words, it is preferable that drying in which hot air is forcibly circulated, that is, drying by a forced convection method, is not performed for the entire drying period.

When the drying of the coating film consisting of the coating liquid is performed in an oven, it is preferable that the drying is performed in two stages, namely low-temperature drying by a forced convection method, and then high-temperature drying by a natural convection method. Here, low-temperature drying refers to drying at a lower temperature than the temperature during high-temperature drying. When the drying is performed in two stages as described above, the low-temperature drying performed first is capable of promoting hydrolysis of the alkoxysilane, and the high-temperature drying performed later is capable of removing the solvent without excessively progressing dehydration-condensation. Therefore, it is possible to obtain a coating layer provided with a high density of silanol groups at the surface.

When the drying is performed in two stages in an oven, it is preferable that the low-temperature drying is performed at a temperature in a range of 40°C to 69°C for a time in a range of 30 to 150 seconds, and the high-temperature drying is performed at a temperature in a range of 70°C to 180°C for a time in a range of 3 to 100 seconds. It is more preferable that the low-temperature drying is performed at a temperature in a range of 45°C to 69°C for a time in a range of 30 to 100 seconds, and the high-temperature drying is performed at a temperature in a range of 70°C to 140°C for a time in a range of 3 to 60 seconds. The difference between the temperature of the low-temperature drying and the temperature of the high-temperature drying is preferably 10°C to 140°C, and more preferably 10°C to 80°C.

### <1.2> Packaging Film

As shown in Fig. 1, the packaging film 10A includes: the multilayer film 1 described above; a first adhesive layer 3 containing a urethane-based material, and provided so as to make contact with the coating layer 14; and a sealant layer 2 that is laminated on the multilayer film 1 so as to face the coating layer 14 and sandwich the first adhesive layer 3 therebetween.

The packaging film 10A can be prepared by laminating a sealant film constituting the sealant layer 2 on a surface of the multilayer film 1 on the coating layer 14 side using a urethane-based adhesive. For example, the packaging film 10A can be prepared by adhering the sealant film constituting the sealant layer 2 and the multilayer film 1 to each other by a dry lamination method using a one-component curing or two-component curing urethane-based adhesive.

### <1.2.1> Sealant Layer

The sealant layer 2 is a layer that provides the packaging film 10A with sealing properties by way of a heat seal, and consists of a sealant film. The sealant layer 2 is preferably an unstretched film.

Examples of the material of the sealant layer include thermoplastic resins such as polyolefin resins and polyester resins, but polyolefin resins are generally used. Specifically, examples of polyolefin resins that can be used include ethylene-based resins such as low-density polyethylene resin (LDPE), medium-density polyethylene resin (MDPE), linear low-density polyethylene resin (LLDPE), ethylene-vinyl acetate copolymer (EVA), ethylene-α-olefin copolymer, and ethylene-(meth)acrylic acid resin copolymer, polypropylene-based resins such as homopolypropylene resin (PP), propylene-ethylene random copolymer, propylene-ethylene block copolymer, and propylene-α-olefin copolymer, and mixtures of these resins. The material of the sealant layer can be selected as appropriate from among the thermoplastic resins mentioned above according to the usage application and temperature conditions of the boiling treatment, retort treatment, and the like.

The sealant layer 2 may also contain various additives, such as a fire retardant, a slip agent, an anti-blocking agent, an antioxidant, a light stabilizer, or a tackifier.

The thickness of the sealant layer 2 is appropriately determined according to the mass of the contents to be accommodated in the packaging body obtained from the packaging film 10A, the shape of the packaging body, and the like, but is preferably in a range of approximately 30 to 150 µm.

### <1.2.2> First Adhesive Layer

The first adhesive layer 3 is a layer that adheres the coating layer 14 of the multilayer film 1 and the sealant layer 2.

The first adhesive layer 3 is formed of an adhesive containing a urethane-based material (that is, a urethane-based adhesive). For example, the first adhesive layer 3 may be formed of a polyurethane resin prepared by reacting a bifunctional or higher isocyanate compound with a base resin such as a polyester polyol, a polyether polyol, an acrylic polyol, a carbonate polyol, or the like. As the polyol serving as the base resin, one type of polyol may be used alone, or two or more types of polyols may be used in combination. For the purpose of promoting adhesion, a carbodiimide compound, an oxazoline compound, an epoxy compound, a phosphorus compound, a silane coupling agent, or the like, may be added to the polyurethane resin mentioned above. From the viewpoint of environmental considerations, the first adhesive layer 3 may contain a polymer component derived from biomass or having biodegradability.

The application amount of the first adhesive layer 3 is set within a range of, for example, 1 to 10 g/m² from the viewpoint of obtaining the desired adhesive strength, followability, processability, and the like.

As described above, the packaging film according to the first embodiment is capable of achieving a high adhesive strength between the coating layer 14 and the sealant layer 2. Therefore, problems caused by a low adhesive strength between the coating layer 14 and the sealant layer, such as a reduction in hand tearability after retort treatment, can be made less likely to occur.

### <2> Second Embodiment

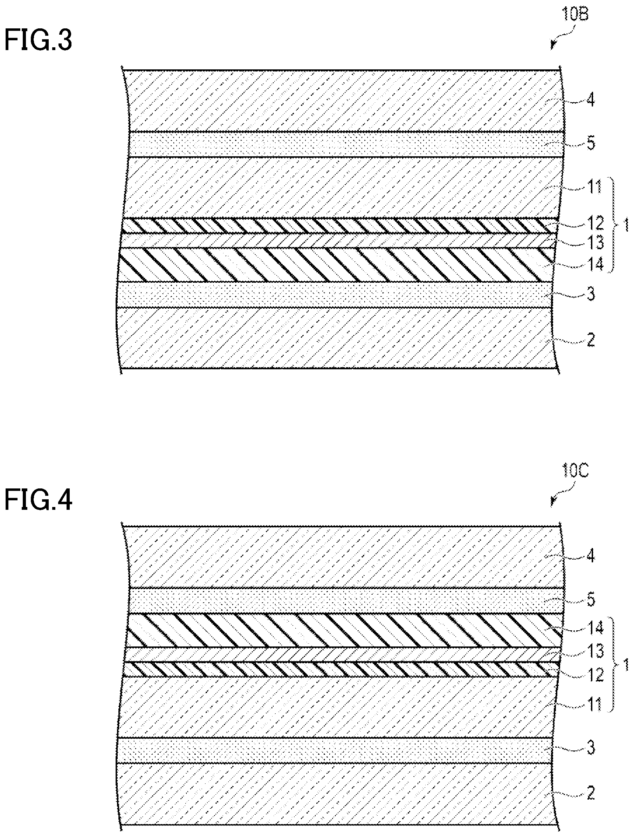

Fig. 3 is a cross-sectional view schematically showing a portion of a packaging film according to a second embodiment of the present invention.

The packaging film 10B according to the second embodiment is the same as the packaging film 10A according to the first embodiment, except that a second substrate layer 4 is provided on the surface of the multilayer film 1 on the first substrate layer 11 side via a second adhesive layer 5.

For example, the packaging film 10B according to the second embodiment can be prepared by laminating the substrate film constituting the second substrate layer 4 to the surface of the packaging film 10A according to the first embodiment on the first substrate layer 11 side using a urethane-based adhesive. For example, the packaging film 10B according to the second embodiment can be prepared by adhering the substrate film constituting the second substrate layer 4 and the packaging film 10A according to the first embodiment to each other by a dry lamination method using a one-component curing or two-component curing urethane-based adhesive.

### <2.1> Second Substrate Layer

The second substrate layer 4 consists of a substrate film. As the substrate film constituting the second substrate layer 4, for example, the films given as examples of the substrate film constituting the first substrate layer 11 of the multilayer film 1 can be used. The films that are suitable for the first substrate layer 11 can be preferably used as the second substrate layer 4.

The thickness of the second substrate layer 4 is not particularly limited. The thickness, for example, can be set in the ranges described above for the first substrate layer 11.

### <2.2> Second Adhesive Layer

The second adhesive layer 5 is a layer that adheres the first substrate layer 11 of the multilayer film 1 and the second substrate layer 4.

The second adhesive layer 5 can be formed using the same adhesives as those mentioned above for the first adhesive layer 3. The application amount of the second adhesive layer 5 is set in the ranges mentioned above for the first adhesive layer 3.

Like the packaging film according to the first embodiment, the packaging film according to the second embodiment is capable of achieving a high adhesive strength between the coating layer 14 and the sealant layer 2. Therefore, problems caused by a low adhesive strength between the coating layer 14 and the sealant layer, such as a reduction in hand tearability after retort treatment, can be made less likely to occur.

### <3> Third Embodiment

Fig. 4 is a cross-sectional view schematically showing a portion of a packaging film according to a third embodiment of the present invention.

The packaging film 10C according to the third embodiment is the same as the packaging film 10B according to the second embodiment, except that the sealant layer 2 is provided on the surface of the multilayer film 1 on the first substrate layer 11 side via the first adhesive layer 3, and the second substrate layer 4 is provided on the surface of the multilayer film 1 on the coating layer 14 side via the second adhesive layer 5. That is, when the packaging film 10C according to the third embodiment is compared to the packaging film 10B according to the second embodiment, the arrangement of the sealant layer 2 and the second substrate layer 4 is reversed.

The packaging film according to the third embodiment is capable of achieving a high adhesive strength between the coating layer 14 and the second substrate layer 4. Therefore, problems caused by a low adhesive strength between the coating layer 14 and the second substrate layer 4, such as appearance defects due to interlayer peeling after retort treatment can be made less likely to occur.

### <4> Modifications

Various modifications can be made to the packaging film described above. For example, the packaging film may further include additional layers such as a printed layer. For example, in the case of the packaging film according to the second embodiment, the second substrate layer 4 may further include a printed layer on the surface facing the multilayer film 1.

### <5> Packaging Body

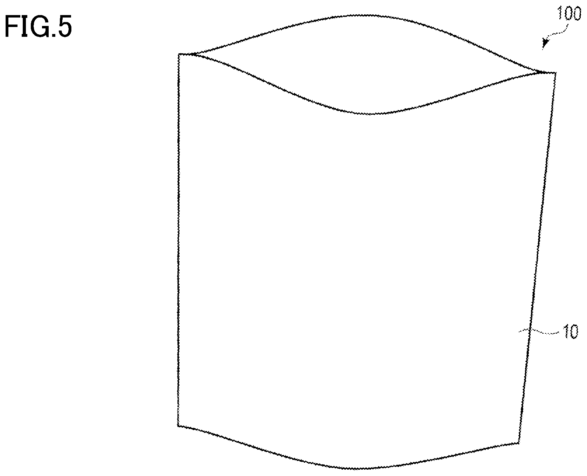

Fig. 5 is a perspective view schematically showing a packaging body. The packaging body 100 shown in Fig. 5 is a bag, and consists of the packaging material 10. The packaging material 10 is any one of the packaging films 10A, 10B and 10C described above. The packaging body 100 is formed in a bag shape such that the sealant layer 2 faces the inside of the bag. In the packaging body 100, the sealant layers are heat sealed to each other at the end portions. The packaging body 100 can take a variety of structures, such as a side seal bag, a three-sided seal bag, and a standing bag.

A packaged article including the packaging body 100 is an article in which contents have been placed in the packaging body 100, and then the opening of the packaging body 100 has been closed. The contents are, for example, a food product or a medical product. A packaged article containing a food product as the contents is, for example, a retort food product. A packaged article containing a medical product as the contents is, for example, an infusion bag. The opening of the packaging body 100 can be closed by heat sealing the sealant layers 2 together at the opening portion. The packaged article is preferably subjected to a heat sterilization process such as retort treatment or boiling treatment.

The retort treatment is generally a method of heating sterilization of microorganisms such as mold, yeasts, and bacteria in order enable food products, medical products, and the like to be preserved over a long period of time. In retort treatment, the packaged article accommodating a food product or the like in the packaging body is generally subjected to heat treatment under pressurized conditions of 0.15 to 0.30 MPa and a temperature of 105°C to 140°C for 10 to 120 minutes. Retort devices include steam-type devices that utilize heated steam, and hot water-type devices that utilize pressurized and heated water, and these devices are used as appropriate according to the sterilization conditions of the food product or the like serving as the contents.

The boiling treatment is a moisture heating sterilization method for enabling long-term storage of food products, medical products, and the like. In the boiling treatment, although dependent on the contents, the packaged article accommodating the food product or the like in the packaging body is generally subjected to heat treatment at atmospheric pressure and a temperature of 60°C to 100°C for 10 to 120 minutes. The boiling treatment is generally performed at a temperature of 100°C or lower using a hot water tank. Boiling treatment devices include batch type devices, in which a packaged article is immersed in a hot water bath at a constant temperature and taken out after treatment for a certain period of time, and continuous type devices in which the packaged article is treated by being passed through a hot water bath tunnel.

The packaging body 100 described above can be preferably used in applications in which retort treatment is carried out at a temperature of 120°C or higher. Even when the packaging body 100 is subjected to retort treatment, it is possible to achieve a high adhesive strength between the coating layer 14 and the layer laminated on the coating layer 14 with the adhesive layer sandwiched therebetween. Therefore, problems caused by a low adhesive strength between the coating layer 14 and the layer laminated on the coating layer 14 with the adhesive layer sandwiched therebetween, such as a reduction in the hand tearability after retort treatment, and appearance defects due to interlayer peeling after retort treatment can be made less likely to occur.

Note that, although a bag-shaped packaging body 100 has been illustrated here, the packaging body obtained using the packaging films 10A, 10B and 10C is not limited to being bag-shaped. For example, the packaging films 10A, 10B and 10C can be used as a lid material in a packaging body including a bottomed cylindrical container body, and a lid body that closes the opening of the container body.

### [Examples]

### <Example 1>

In Example 1, a packaging film corresponding to the packaging film according to the second embodiment (see Fig. 3) was prepared.

### (Gas Barrier Film Preparation Step)

A stretched polypropylene having a film thickness of 20 µm was prepared as the first substrate film.

Then, an acrylic-based primer solution was applied to the first substrate film by gravure coating and then dried, forming an anchor coat layer having a thickness of 0.1 µm.

Then, a thin film of silicon oxide having a thickness of 30 nm was vapor deposited on the anchor coat layer by reactive deposition using high-frequency excited ion plating in an oxygen atmosphere under reduced pressure. As a result, a gas barrier layer consisting of an inorganic oxide was formed.

Next, tetraethoxysilane (hereinafter referred to as "TEOS"), methanol, and a 0.1N aqueous hydrochloric acid solution were mixed in a mass ratio of 17:10:73 to prepare a TEOS hydrolysis solution. Also, a 5% by mass aqueous solution of polyvinyl alcohol (hereinafter referred to as "PVA") was prepared. Furthermore, 1,3,5-tris(3-trimethoxysilylpropyl)isocyanurate was diluted with a solution containing water and IPA (isopropyl alcohol) in a mass ratio of 1:1 to prepare a solution with a solid concentration (in terms of R2Si(OH)₃) of 5% by mass. The coating liquid was prepared by mixing the three prepared solutions, that is, the TEOS hydrolysis solution, the PVA solution, and the isocyanurate silane solution. The coating liquid was prepared such that the mass ratio of the SiO₂ solid content (converted value) of TEOS, the R2Si(OH)₃ solid content (converted value) of the isocyanurate silane, and the PVA solid content was 50:10:40. This coating liquid was applied to the gas barrier layer by a gravure coating method. Then, the coating liquid was dried at a temperature of 60°C for 50 seconds using a forced convection oven, and then dried at a temperature of 80°C for 40 seconds using a natural convection oven, which formed a coating layer having a thickness of 0.3 µm.

The gas barrier film was prepared according to the procedure above. The "amount of SiOH⁺ at the surface of the coating layer" of the gas barrier film of Example 1 was 0.04.

### (Lamination Step)

As the sealant film, a unstretched polypropylene film having a thickness of 60 µm was prepared, and as the second substrate film, a stretched polypropylene film having a thickness of 20 µm was prepared.

The unstretched polypropylene film having a thickness of 60 µm and the surface of the gas barrier film on the coating layer side were bonded to each other by a dry lamination method via a two-liquid curing urethane-based adhesive agent. Further, the stretched polypropylene film having a thickness of 20 µm was bonded to the surface of the gas barrier film on the side opposite to the surface in which the coating layer was formed by a dry lamination method via a two-liquid curing urethane-based adhesive agent.

The packaging film was prepared according to the procedure above.

### <Example 2>

In Example 2, a packaging film corresponding to the packaging film according to the second embodiment (see Fig. 3) was prepared.

Specifically, except for drying the coating liquid at a temperature of 60°C for 30 seconds using a forced convection oven, and then drying at a temperature of 120°C for 30 seconds using a natural convection oven, the gas barrier film was prepared according to the same procedure as Example 1. The "amount of SiOH⁺ at the surface of the coating layer" of the gas barrier film of Example 2 was 0.03. Then, the packaging film was prepared following the same procedure as Example 1.

### <Example 3>

In Example 3, a packaging film corresponding to the packaging film according to the second embodiment (see Fig. 3) was prepared.

Specifically, except for applying a urethane-based primer solution instead of an acrylic-based primer solution to the first substrate film by gravure coating, and forming an anchor coat layer having a thickness of 1.0 µm by drying the coating, the gas barrier film was prepared according to the same procedure as Example 2. The "amount of SiOH⁺ at the surface of the coating layer" of the gas barrier film of Example 3 was 0.03. Then, the packaging film was prepared following the same procedure as Example 2.

### <Example 4>

In Example 4, a packaging film corresponding to the packaging film according to the second embodiment (see Fig. 3) was prepared.

Specifically, other than preparing the coating liquid such that the mass ratio of the SiO₂ solid content (converted value) of TEOS, the R2Si(OH)₃ solid content (converted value) of the isocyanurate silane, and the PVA solid content was 40:10:50, the gas barrier film was prepared according to the same procedure as Example 1. The "amount of SiOH⁺ at the surface of the coating layer" of the gas barrier film of Example 4 was 0.04. Then, the packaging film was prepared following the same procedure as Example 1.

In Example 5, a packaging film corresponding to the packaging film according to the second embodiment (see Fig. 3) was prepared.

Specifically, except for drying the coating liquid at a temperature of 60°C for 30 seconds using a forced convection oven, and then drying at a temperature of 120°C for 30 seconds using a natural convection oven, the gas barrier film was prepared according to the same procedure as Example 4. The "amount of SiOH⁺ at the surface of the coating layer" of the gas barrier film of Example 5 was 0.03. Then, the packaging film was prepared following the same procedure as Example 4.

### <Comparative Example 1>

In Comparative Example 1, except for drying the coating liquid at a temperature of 130°C for 60 seconds using a forced convection oven, the gas barrier film was prepared according to the same procedure as Example 4. The "amount of SiOH⁺ at the surface of the coating layer" of the gas barrier film of Comparative Example 1 was 0.01. Then, the packaging film was prepared following the same procedure as Example 4.

### <Example 6>

In Example 6, a packaging film corresponding to the packaging film according to the second embodiment (see Fig. 3) was prepared.

### (Gas Barrier Film Preparation Step)

A biaxially stretched polyethylene terephthalate film having a film thickness of 12 µm was prepared as the first substrate film.

Then, an acrylic-based primer solution was applied to the first substrate film by gravure coating and then dried, forming an anchor coat layer having a thickness of 0.1 µm.

Next, aluminum oxide having a film thickness of 15 nm was vapor deposited on the anchor coat layer by thermal vapor deposition using an electron beam heating method in an oxygen environment under reduced pressure. As a result, a gas barrier layer consisting of an inorganic oxide was formed.

Next, tetraethoxysilane (hereinafter referred to as "TEOS"), methanol, and a 0.1N aqueous hydrochloric acid solution were mixed in a mass ratio of 17:10:73 to prepare a TEOS hydrolysis solution. Also, a 5% by mass aqueous solution of polyvinyl alcohol (hereinafter referred to as "PVA") was prepared. Furthermore, β-(3,4-epoxycyclohexyl)trimethoxysilane was diluted with a solution containing water and IPA (isopropyl alcohol) in a mass ratio of 1:1 to prepare a solution with a solid concentration (in terms of R2Si(OH)₃) of 5% by mass. The coating liquid was prepared by mixing the three prepared solutions, that is, the TEOS hydrolysis solution, the PVA solution, and the trimethoxysilane solution. The coating liquid was prepared such that the mass ratio of the SiO₂ solid content (converted value) of TEOS, the R2Si(OH)₃ solid content (converted value) of the trimethoxysilane, and the PVA solid content was 70:10:20. This coating liquid was applied to the gas barrier layer by a gravure coating method. Then, the coating liquid was dried at a temperature of 60°C for 30 seconds using a forced convection oven, and then dried at a temperature of 120°C for 30 seconds using a natural convection oven, which formed a coating layer having a thickness of 0.3 µm.

The gas barrier film was prepared according to the procedure above. The "amount of SiOH⁺ at the surface of the coating layer" of the gas barrier film of Example 6 was 0.05.

### (Lamination Step)

As the sealant film, an unstretched polyethylene film having a thickness of 60 µm was prepared, and as the second substrate film, a biaxially stretched polyethylene terephthalate film having a thickness of 12 µm was prepared.

The unstretched polyethylene film having a thickness of 60 µm and the surface of the gas barrier film on the coating layer side were bonded to each other by a dry lamination method via a two-liquid curing urethane-based adhesive agent. Further, the biaxially stretched polyethylene terephthalate film having a thickness of 12 µm was bonded to the surface of the barrier film on the side opposite to the surface in which the coating layer was formed by a dry lamination method via a two-liquid curing urethane-based adhesive agent.

The packaging film was prepared according to the procedure above.

### <Example 7>

In Example 7, a packaging film corresponding to the packaging film according to the third embodiment (see Fig. 4) was prepared.

### (Gas Barrier Film Preparation Step)

The gas barrier film was prepared following the same procedure as Example 1. The "amount of SiOH⁺ at the surface of the coating layer" of the gas barrier film of Example 7 was 0.04.

### (Lamination Step)

As the second substrate film, a stretched polypropylene film having a thickness of 20 µm was prepared, and as the sealant film, an unstretched polypropylene film having a thickness of 60 µm was prepared.

The stretched polypropylene film having a thickness of 20 µm and the surface of the gas barrier film on the coating layer side were bonded to each other by a dry lamination method via a two-liquid curing urethane-based adhesive agent. Further, the unstretched polypropylene film having a thickness of 60 µm was bonded to the surface of the barrier film on the side opposite to the surface in which the coating layer was formed by a dry lamination method via a two-liquid curing urethane-based adhesive agent.

The packaging film was prepared according to the procedure above.

### <Example 8>

In Example 8, a packaging film corresponding to the packaging film according to the third embodiment (see Fig. 4) was prepared.

### (Gas Barrier Film Preparation Step)

The gas barrier film was prepared following the same procedure as Example 2. The "amount of SiOH⁺ at the surface of the coating layer" of the gas barrier film of Example 8 was 0.03.

### (Lamination Step)

As the second substrate film, a stretched polypropylene film having a thickness of 20 µm was prepared, and as the sealant film, an unstretched polypropylene film having a thickness of 60 µm was prepared.

The stretched polypropylene film having a thickness of 20 µm and the surface of the gas barrier film on the coating layer side were bonded to each other by a dry lamination method via a two-liquid curing urethane-based adhesive agent. Further, the unstretched polypropylene film having a thickness of 60 µm was bonded to the surface of the barrier film on the side opposite to the surface in which the coating layer was formed by a dry lamination method via a two-liquid curing urethane-based adhesive agent.

The packaging film was prepared according to the procedure above.

### <Comparative Example 2>

### (Gas Barrier Film Preparation Step)

In Comparative Example 2, other than preparing the coating liquid such that the mass ratio of the SiO₂ solid content (converted value) of TEOS, the R2Si(OH)₃ solid content (converted value) of the isocyanurate silane, and the PVA solid content was 50:10:40, the gas barrier film was prepared according to the same procedure as Comparative Example 1. The "amount of SiOH⁺ at the surface of the coating layer" of the gas barrier film of Comparative Example 2 was 0.01.

### (Lamination Step)

As the second substrate film, a stretched polypropylene film having a thickness of 20 µm was prepared, and as the sealant film, an unstretched polypropylene film having a thickness of 60 µm was prepared.

The stretched polypropylene film having a thickness of 20 µm and the surface of the gas barrier film on the coating layer side were bonded to each other by a dry lamination method via a two-liquid curing urethane-based adhesive agent. Further, the unstretched polypropylene film having a thickness of 60 µm was bonded to the surface of the barrier film on the side opposite to the surface in which the coating layer was formed by a dry lamination method via a two-liquid curing urethane-based adhesive agent.

The packaging film was prepared according to the procedure above.

### <Example 9>

**In** Example 9, a packaging film corresponding to the packaging film according to the third embodiment (see Fig. 4) was prepared.

### (Gas Barrier Film Preparation Step)

The gas barrier film was prepared following the same procedure as Example 6. The "amount of SiOH⁺ at the surface of the coating layer" of the gas barrier film of Example 9 was 0.05.

### (Lamination Step)

A biaxially stretched polyethylene terephthalate film having a thickness of 12 µm was prepared as the second substrate film, and an unstretched polyethylene film having a thickness of 60 µm was prepared as the sealant film.

The biaxially stretched polyethylene terephthalate film having a thickness of 12 µm and the surface of the gas barrier film on the coating layer side were bonded to each other by a dry lamination method via a two-liquid curing urethane-based adhesive agent. Further, the unstretched polyethylene film having a thickness of 60 µm was bonded to the surface of the barrier film on the side opposite to the surface in which the coating layer was formed by a dry lamination method via a two-liquid curing urethane-based adhesive agent.

The packaging film was prepared according to the procedure above.

### <Example 10>

In Example 10, a packaging film corresponding to the packaging film according to the first embodiment (see Fig. 1) was prepared.

### (Gas Barrier Film Preparation Step)

The gas barrier film was prepared following the same procedure as Example 1. The "amount of SiOH⁺ at the surface of the coating layer" of the gas barrier film of Example 10 was 0.04.

### (Lamination Step)

A unstretched polypropylene having a thickness of 60 µm was prepared as the sealant film. The unstretched polypropylene film having a thickness of 60 µm and the surface of the gas barrier film on the coating layer side were bonded to each other by a dry lamination method via a two-liquid curing urethane-based adhesive agent. As a result, the packaging film was prepared.

### <Evaluation of Amount of SiOH⁺ at Surface of Coating Layer>

The "amount of SiOH⁺ at the surface of the coating layer" was obtained using the method described above. Note that, as the peak at the mass-to-charge ratio m/z = 45, although a SiOH⁺ peak and a C₂H₅O⁺ peak were both detected, these peaks were counted separately.

### <Evaluation of Oxygen Barrier Properties>

### (Retort Treatment)

The packaging films prepared in Examples 1 to 10, and the packaging films prepared in Comparative Examples 1 and 2 were used to prepare a packaging bag having the four sides as seal portions, and were filled with water as the contents. Then, retort sterilization treatment was performed at 130°C for 30 minutes.

### (Measurement of Oxygen Permeability)

The oxygen permeability of the packaging bag was measured after retort treatment. The measurement was performed under conditions of a temperature of 30°C and a relative humidity of 70% using an oxygen permeability measurement device (OXTRAN2/20 manufactured by Modern Control Inc.). The measurement method conformed to JIS K-7126, B method (isobaric method) and ASTM D3985-81, and the measured values were expressed in units of [cm(STP)/ m²·day·atm].

### <Evaluation of Hand Tearability>

Ten packaging bags were prepared in each Example in order to perform the test ten times. The hand tearability was evaluated with respect to the packaging bags after retort treatment. An incision was made in the seal portion with scissors, and the packaging bag was unsealed by hand starting at the incision, and this operation was repeated 10 times. The hand tearability was evaluated by the following evaluation criteria.

A evaluation: no irregularities were observed at the hand-torn locations in any of the ten tests. That is, peeling or stretching of the sealant film was not observed at the hand-torn locations.

B evaluation: peeling caused by a low adhesive strength between the coating layer and the adhesive layer and stretching of the sealant film accompanying the peeling was observed for at least one of the ten tests.

### <Appearance Evaluation>

Ten packaging bags were prepared in each Example in order to perform the test ten times. The packaging bag after retort treatment was illuminated from the outside with a penlight, and the presence or absence of appearance defects was visually observed while changing the angle between the penlight and the packaging bag.

A evaluation: no appearance defects were visually observed in any of the ten tests. That is, no peeling or lifting was observed between the coating layer and the adhesive layer.

B evaluation: peeling or lifting caused by a low adhesive strength between the coating layer and the adhesive layer and stretching of the sealant film accompanying the peeling was observed for at least one of the ten tests, and a portion of the peeling or lifting was visually observed.

### <Results>

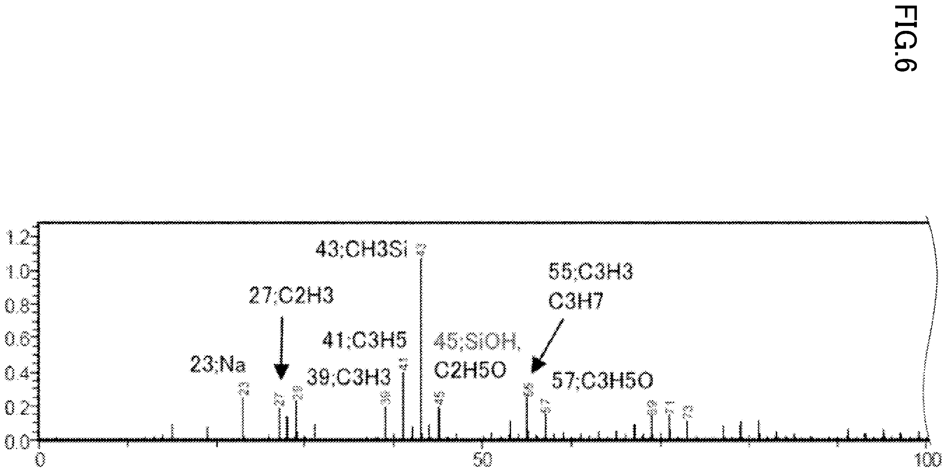

The result of the ToF-SIMS measurement of the gas barrier film of Example 4 is shown in Fig. 6. Fig. 6 is a positive ion mass spectrum in which the horizontal axis represents the mass-to-charge ratio (m/z) and the vertical axis represents the ion intensity. Furthermore, the packaging bags of Examples 1 to 10 and Comparative Examples 1 and 2 were evaluated with respect to the oxygen barrier properties, hand tearability, and appearance, and the results are shown in the table below.

**[Table 1]**

| | Amount of SiOH⁺ at Surface of Coating Layer | Oxygen Permeability | Hand Tearability | Appearance |
|---|---|---|---|---|
| Example 1 | 0.04 | 1.1 | A | |
| Example 2 | 0.03 | 1.2 | A | |
| Example 3 | 0.03 | 0.9 | A | |
| Example 4 | 0.04 | 1.2 | A | |
| Example 5 | 0.03 | 1.3 | A | |
| Comparative Example 1 | 0.01 | 1.4 | B | |
| Example 6 | 0.05 | 0.4 | A | |
| Example 7 | 0.04 | 1.3 | | A |
| Example 8 | 0.03 | 1.3 | | A |
| Comparative Example 2 | 0.01 | 1.5 | | B |
| Example 9 | 0.05 | 0.5 | | A |
| Example 10 | 0.04 | 1.3 | A | |

The packaging bags of Examples 1 to 10 and the packaging bags of Comparative Examples 1 and 2 showed superior gas barrier properties. Furthermore, in Examples 1 to 10, the amount of SiOH⁺ at the surface of the coating layer was greater than that in Comparative Examples 1 and 2. This resulted in an increased adhesive strength between the coating layer and the adhesive layer formed of the urethane-based adhesive, and superior results were obtained in terms of the hand tearability and the appearance. On the other hand, in Comparative Examples 1 and 2, the amount of SiOH⁺ at the surface of the coating layer was small. This resulted in a low adhesive strength between the coating layer and the adhesive layer formed of the urethane-based adhesive, and superior results were not obtained in terms of the hand tearability and the appearance.

### [Reference Signs List]

- 1: Multilayer film,
- 2: Sealant layer,
- 3: First adhesive layer,
- 4: Second substrate layer,
- 5: Second adhesive layer,
- 10: Packaging material,
- 10A: Packaging film,
- 10B: Packaging film,
- 10C: Packaging film,
- 11: First substrate layer,
- 12: Anchor layer,
- 13: Gas barrier layer,
- 14: Coating layer,
- 100: Packaging body.

## Claims

1. A multilayer film comprising:
a first film that serves as a substrate film; and
a coating layer that is provided on one surface of the first film, and that includes an alkoxysilane hydrolysate and an alkoxysilane
dehydration-condensation reaction product; wherein
at a surface of the coating layer, an amount of SiOH⁺, which is obtained using time-of-flight type secondary ion mass spectrometry and standardized according to a total positive ion amount, is within a range of 0.02 to 0.07.

2. The multilayer film according to claim 1, wherein
the coating layer further contains a water-soluble polymer.

3. The multilayer film according to claim 1, wherein
the alkoxysilane is a mixture of tetraalkoxysilane and a silane coupling agent.

4. The multilayer film according to claim 2, wherein
the coating layer is a cured product of a coating liquid having an alkoxysilane content in a range of 20 to 90 parts by mass with respect to 100 parts by mass of a total amount of the alkoxysilane and the water-soluble polymer.

5. The multilayer film according to claim 1, further comprising
a gas barrier layer which is interposed between the first film and the coating layer.

6. The multilayer film according to claim 5, further comprising
an anchor layer which is interposed between the first film and the gas barrier layer.

7. A packaging film comprising:
a multilayer film according to any one of claims 1 to 6;
an adhesive layer containing a urethane-based material, and provided so as to make contact with the coating layer; and
a second film that is laminated on the multilayer film so as to face the coating layer and sandwich the adhesive layer therebetween.

8. The packaging film according to claim 7, wherein
the second film is a sealant film.

9. The packaging film according to claim 7, further comprising
a sealant film is provided on another surface of the substrate film.

10. A packaging body comprising the packaging film according to claim 7.

11. A packaged article comprising:
the packaging body according to claim 10; and
contents filled inside the packaging body.
